# EUROPEAN PATENT APPLICATION

(11) **EP 2 866 176 A1**
(43) Date of publication of application: **29.04.2015**
(21) Application number: 14190345.0
(22) Date of filing: 24.10.2014
(51) Int. Cl.: G06Q 10/02

(54) **Tiered oversubscription**

(30) Priority: 25.10.2013 US 201314063929
(71) Applicant: Live Nation Entertainment, Inc, Beverly Hills, CA 90210 (US)
(72) Inventor: Scarborough, David, Beverly Hills, CA 90210 (US)
(74) Representative: Graham, Emma Louise

(57) **Abstract**

Techniques are described for allocating and distributing tickets to an event at a venue. The tickets are distributed in a multi-step process in which first pre-issue tickets are allocated and distributed. Expected attendance for an event is calculated and pre-issue tickets are allocated and distributed based on the expected attendance. Seats are assigned at a later time when the user enters the venue or checks in for the event. When a user's ticket is part of a group of tickets, seats are assigned for the entire group rather than merely assigning a ticket for the user.

## Description

### BACKGROUND

This disclosure relates in general to methods and systems for automatically issuing tickets for particular seats in a double-stage manner.

Conventionally, distributing tickets for an event is based on sales or distribution of paper or electronic tickets before an event. Users who purchased or reserved tickets before an event are granted entry to an event. In some cases, many of the ticket holders may not attend an event leaving many seats unfilled. Seats may be unfilled despite there being other users who may desire to attend the event but were not able to obtain a ticket.

### SUMMARY

Techniques herein attempt to provide more flexible and satisfactory experiences regarding distribution of tickets for an event. In some embodiments, tickets are initially issued to a set of users, but the issued tickets do not include seat assignments. Seats are assigned at a later time. For example, after verifying that a given user has a valid ticket, an available seat can be identified. This identification can be performed by finding which seat amongst those still available has a highest seat score, by identifying which available seat(s) is by sufficient other available seats such that a user can sit with a group, by utilizing a seating-time efficiency model, and/or by selecting an available seat that would not unduly disturb subsequent group seating. In some instances, when a user's ticket is part of a group of tickets, seats are assigned for the entire group rather than merely assigning a ticket for the user.

In some embodiments, a method is provided for automatically managing an allocation of tickets to an event to select potential purchasers. An indication that a user is attending the event at a venue hosting the event is received. A validation is made that the user had been pre-issued a ticket for the event at the venue. A pre-issued ticket does not include an assignment to any seat in the venue. A characteristic is determined that characterizes assignments to seats in the venue for the event. A seat in the venue that has not been assigned for the event is identified. A ticket is generated for the identified seat for the event, wherein the ticket includes an assignment to the identified seat. The ticket that includes the assignment to the identified seat is issued to the user. In some embodiments, a ticket management system that includes one or more processors; and one or more memories coupled with the one or more processors, wherein the one or more processors and one or more memories are configured to perform the method.

In some embodiments, a ticket management system is provided that includes a ticket engine that receives an indication that a user is attending an event at a venue and validates that the user had been pre-issued a ticket for the event at the venue, wherein a pre-issued ticket does not include an assignment to any seat in the venue. The system further includes a seat resource engine that identifies a seat in the venue that has not been assigned for the event and generates a ticket for the identified seat for the event, wherein the ticket includes an assignment to the identified seat. The system further includes a ticket engine that causes the ticket that includes the assignment to the identified seat to be issued.

Further areas of applicability of the present disclosure will become apparent from the detailed description provided hereinafter. It should be understood that the detailed description and specific examples, while indicating various embodiments, are intended for purposes of illustration only and are not intended to necessarily limit the scope of the disclosure.

### BRIEF DESCRIPTION OF THE DRAWINGS

The present disclosure is described in conjunction with the appended figures:
FIG. 1 depicts a block diagram of an embodiment of a ticket interaction system;
FIG. 2 depicts a block diagram of an embodiment of a ticket management system;
FIG. 3 depicts a flowchart of an embodiment of a process for allocating pre-issue tickets and allocating seat resources;
FIG. 4 illustrates a flowchart of an embodiment of a process for determining pre-issue ticket allocation;
FIG. 5 illustrates a flowchart of an embodiment of a process for assigning seat resources to users;
FIG. 6 illustrates a flowchart of an embodiment of a process for allocating seat resources to an associated group of pre-issue ticket holders;
FIG. 7 illustrates a flowchart of an embodiment of a process for allocating seat resources to an associated group of pre-issue ticket holders;
FIG. 8 illustrates a flowchart of an embodiment of a process for allocating seat resources for an efficient filling of a venue;
FIG. 9 depicts a block diagram of an embodiment of a computer system; and
FIG. 10 depicts a block diagram of an embodiment of a special-purpose computer system.

In the appended figures, similar components and/or features can have the same reference label. Further, various components of the same type can be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

The ensuing description provides preferred exemplary embodiment(s) only and is not intended to limit the scope, applicability or configuration of the disclosure. Rather, the ensuing description of the preferred exemplary embodiment(s) will provide those skilled in the art with an enabling description for implementing a preferred exemplary embodiment. It is understood that various changes can be made in the function and arrangement of elements without departing from the spirit and scope as set forth in the appended claims.

Access to events is often based on paper or electronic tickets that are distributed before an event. Each ticket for an event may authorize the holder of the ticket with an entry to a concert, a sporting event, a show, and the like. A ticket may traditionally provide the ticket holder with a guaranteed entry and an assigned seat at the venue. The allocation of seats for ticket holders is typically performed at the time of purchase of the ticket and may be days or even months before the event. Allocation of resources such as seats before an event, however, may results in ineffective utilization of the venue resources.

For example, the demand for tickets may be greater than the availability of tickets. Due to the limited number of tickets, some users may be left without a ticket and without an opportunity to attend the event. However, weather events, traffic, other obligations, may keep ticket holders from attending leaving many seats unfilled. For some events, the number of absentee ticket holders may be 5% or more of the total ticket holders and maybe even 20% or more. Unfilled seats may be frustrating for event goers, event organizers, vendors, and performers and may lead to lost revenue and lost prestige for the performers and event organizers. Users who were not able to obtain a ticket before an event may be frustrated that they were unable to attend an event despite open seats. Vendors that sell merchandise or food at the venue may lose revenue since there may be fewer people attending the event. Performers may be frustrated since empty seats at an event may hurt their public image and reputation.

In another example, allocation of tickets and seat resources for a venue before an event may cause inefficient filling of the venue. As users arrive at the venue for the event they may be required to proceed to their pre assigned or preallocated seats or areas of the venue. The order or arrival of the users may be unpredictable and random and may not correspond to an arrival order that would provide an efficient filling of the venue. In some venues, one efficient way of filling a row of seats at a venue may be to first seat all users with seats in the middle of a row of seats and then fill the row of from the middle out to the aisle seats. However, with preallocated seat assignments, as the users arrive to the event, the users sitting on the outside, near the isles of the row may arrive first and block all subsequent users in the row from reaching their seats. The user at the end of the row may need to step out of the row and let every new user sitting in the row pass to access their seats, potentially slowing down the venue filling process. This may be particularly frustrating for users who arrived at an event on time and are moving to allow for late attendees to access their seats.

Efficient filling of a venue may be especially important for large sporting events such as college football games, for example, where many of the users tailgate before the game and only enter the venue a short time before the kickoff or start of the game. The rush of users to the venue with unordered seat allocation may lead to venue bottlenecks, safety concerns, chaos, as well as distraction and annoyance to users trying to enjoy the event.

The systems and methods described herein provide for a more efficient allocation of seating resources. In embodiments, at least some of the seat resources for the event at a venue are allocated to users close to the time of the event. The allocation of seat resources may be performed as users enter the venue, or hours/minutes before the event, for example.

Allocation of seat resources at or near the time of the event may result in a more effective utilization of the venue resources. Tickets may be distributed and allocated allowing greater utilization and filling of a venue for an event even with many absentee ticket holders. Likewise, allocation of seat resources upon arrival of users to a venue may allow the resources to be assigned to users in a way that allows efficient filling of the venue.

In some embodiments, a ticket distribution system may be configured to first allocate and distribute pre-issue tickets to users. The pre-issue tickets may provide the user with an authorization to attend the event. The pre-issue tickets may, in some embodiments, have limited assignment of seating resources for an event. One type of pre-issue ticket may only guarantee the ticket holder with an entrance to an event but may not guarantee a specific seat resource at the venue. The pre-issue ticket may have no assignment to a specific seat resource. Some types of pre-issue ticket may include a guarantee the ticket holder with an entrance to an event and a category of a seat resource at the event. The pre-issue ticket may guarantee the ticket holder with a specific class of seat, but not a specific seat at the venue. For example, the pre-issue may guarantee the ticket holder with a seat in the first ten rows of seats in a venue, in a specific section of the venue, in a designated standing area of the venue, and/or the like. Yet another type of pre-issue ticket may guarantee the ticket holder with an entrance to an event and a specific seat resource at the venue only if the user arrives at the venue or checks in prior to the event, 5 minutes or more before the start of the event, or 15 minutes or more before the start of the event. In embodiments, pre-issue tickets may provide for a guaranteed entry to an event and a limited or conditional seat resource assignment for the venue.

In some embodiments, multiple type of pre-issue tickets may be allocated and distributed for an event. The pre-issue tickets may be allocated and distributed to users days, weeks, or even hours before the event. The pre-issue tickets may be sold to users and/or distributed to users at no cost. Pre-issue tickets may be distributed as any normal ticket and may take a form of a paper ticket, electronic ticket, and/or the like.

For many events more pre-issue tickets may be allocated and distributed to users than the capacity of a venue for an event. The pre-issue tickets may be over issued with the expectation that a number or percentage of the users with pre-issue tickets will not attend the event. Users with pre-issue tickets may not attend an event due to other commitments, traffic, weather conditions, and/or other reasons.

In some embodiments, the elements of the ticket distribution system may identify an expected number or percentage of users with pre-issue tickets that will not attend the event. Elements of the ticket distribution system may predict, calculate, or estimate the number or percentage of users with pre-issue tickets that are expected not to attend an event. Based at least in part on the number of pre-issue ticket holders expected not to attend the event, the inventory manager may use the system to oversubscribe the number of pre-issue tickets for the event.

Predictions, estimates, and/or calculations related to the number of pre-issue ticket-holders that are expected not to attend an event may be made at least in part based on historical data, weather data, traffic data, social media trends, internet trends, other events, and/or the like. The ticket distribution system may collect data related to the historical attendance records for specific venues, events, similar events, tour series, and/or the like and determine an initial expected attendance for the event. Based on the initial expected attendance for an event, the number of pre-issue tickets may be oversubscribed and may exceed the capacity of the venue.

For example, the number of pre-issue tickets may be set to a reciprocal of an expected attendance rate, In some instances, the number of pre-issue tickets are set to a percentage (e.g., 95%, 99%, 101% or 105%) of the reciprocal, which may (for sub-100% percentages) work against not having enough seats for attendees with pre-issue tickets or (for supra-100% percentages) bias towards having attendees in all seats in a venue. The number of pre-issue tickets issued may depend on the confidence of the initial expected attendance estimates. When the confidence level (i.e. variance of historical data) is low the number of pre-issue tickets that may be initially allocated for an event may be conservative and may be 5% or 10% or more lower than the estimate may suggest. For example, the attendance expectation shows that 120% of a venue's capacity of pre-issue tickets should be allocated in order to fill the venue to capacity only 110% of a venue's capacity of pre-issue tickets may be issued. When the confidence level is high the number of pre-issue tickets that may be initially allocated for an event may be 1% or 5% or less than the estimate may suggest.

The attendance estimate may be periodically or continuously refined and updated. Weather data and trend data may be more accurate closer to the date of an event. Based on improved estimates of the attendance or higher confidence of the initial estimates the additional pre-issue tickets may be allocated and distributed in order to fill the venue close to capacity. In some embodiments, secondary ticket markets may be monitored to determine the price trends, for example. If the ticket-prices on the secondary market for an event are increasing as the event date is approaching, for example, it may be an indication of scarcity of tickets for the event and may indicate a large attendance.

In some embodiments, the number of pre-issue tickets that are initially allocated may not exceed the capacity of the venue. The demand and trends of the pre-issue tickets may be monitored to generate an estimate of expected number or users with pre-issued tickets that will attend the event. Social media, twitter, blogs, and the like may be used to estimate the trends, excitement, or other factors associated with an event. Depending on the reaction to the initial pre-issue tickets, additional pre-issue tickets may be allocated and distributed.

For some events, the attendance estimates may be generated for specific sections or areas of the venue. In some embodiments, the pre-issue may guarantee the ticket holder with a seat in a specific section of the venue.

Pre-issue tickets may be allocated and distributed up to the start of the event (e.g., unless a pre-issue threshold has been reached). GPS data or geolocation data may be used to determine or estimate users' location to predict if they will be attending an event. An application on a user's phone, vehicle, or other device may be configured to send periodic transmissions related to the location of the user. The GPS data of the phone, for example, may be queries by the application and sent to the system.

When a user with a pre-issued ticket arrives at a venue for an event, the user may be assigned a specific seat resource at the venue. The seat resource may be a specific seat, general admission to a specific section of the venue, standing room at specific area of the venue, and/or the like. In some embodiments, the user may be prompted to present the pre-issue ticket. The pre-issue ticket may be authenticated. A new ticket may be issued to the user with an assigned seating resource. In some embodiments, the assigned resource may be printed on the user's pre-issue ticket and returned to the user. In other embodiments, the seat assignment may be delivered to a user's mobile electronic device via email, text, or through an application on the mobile device.

The allocation of the seat resource may be performed in substantially real time when the user enters the venue. The ticket distribution system may locate available or assigned seat resources in the venue, determine any constraints on seat resources associated with the pre-issue ticket and allocate the seat to the user. In some embodiments, the system may assign the best available seat to the user that is available within the constraints of the pre-issue ticket. The system may determine the best available seat within the pre-issue ticket constraints and issue the best available ticket for the user. For example, if a pre-issue ticket provides a user with a guarantee of a seat in a specific section, upon entry and validation of the pre-issue ticket, the best available seat in the section may be assigned to the user. In some embodiments, during the seat resource assignment, the user may be presented with one or more alternative seat resource choices. The user may be presented with several seats to choose from. In some instances, the user may be presented with one or more alternative sections or areas in the venue from which a specific seat resource may be assigned to the user.

In some embodiments, the system may allocate seat resources to users with pre-issued tickets an hour or a day or more before the event. The system may allocate a specific seat resource or a set of seat resources to the pre-allocated ticket based on the constraints associated with the pre-issue ticket before an event. When a user enters the venue, the pre-allocated seat or one of available set of seats may be assigned to the user.

In some embodiments, the system may assign seat resources to users with pre-issued tickets based on the user's location information. The system may receive notifications of the geolocations the users with pre-issue tickets. Based on the location of the user, and/or the trajectory of the user the system may determine and/or estimate the arrival time of the user to the venue. Based on the geolocation information and/or the estimate of arrival the system may allocate and assign seat resources to the user before the user arrives at the venue.

During the assignment of seat resources to the user, the system may determine available seats in better locations or section and offer or user seat upgrade. The seat upgrades may be offered to specific valued customers, specific class of pre-issued tickets and the like. The system may estimate the attendance at the venue based on the attendance characteristics at the venue during the event and determine the likelihood that some section may have empty seat resources. The seat resources may be made available to users with pre-issue tickets that would normally not be made available to.

In some embodiments, users with pre-issued tickets may be able to check-in and receive a seat resource assignment for the event at the venue. Users may check in using their mobile devices such as smart phones, tablets, and the like to assert that they are planning on attending the event. The system may use the user's location and/or trajectory that may be received from the user's device to accept the assertion. If the user is within a specific distance of the venue when they check in, for example, the system may accept the check-in request and allocate and assign a seat resource to the user. The system may use the user's location to estimate the user's arrival at the venue and assign the seat resource based the user's estimated time of arrival. The system may be configured to reject the user's check-in request if the user is far away from the venue or traffic data or transit data indicate that it is unlikely that the user can arrive at the venue before the start of the event. The user may, using their mobile device, receive an indication that the check-in assertion was rejected by the system but if the user arrives before the start of the event the pre-issue ticket may still be honored and the seat will be assigned when the user arrives at the venue. In some embodiments, after one failed check-in, the system may not accept any more remote check-in requests from the user.

For some events, users may have the ability to check-in for an event from a mobile device or other terminal and specify their arrival time or entry time to the venue for the event. The feature may be especially beneficial for events where users tend to wait or congregate in front of a venue before an event and not enter the venue until the start of the event due to tailgate parties, for example. Users may be assigned a seat resource at the venue based on their indication of the time of entry to the venue. The seat assignment may be strategically determined based on the expected time of arrival to facilitate faster filling of the venue, for example. In some embodiments, after the user specifies the expected time of entry to the venue the user may be given a time window for actually entering the venue for the event. The system may be configured to release the seats if the user does not arrive in the predetermined time window.

The system may be configured to incentivize user for entering or the venue or remotely checking-in early before the event. Users that check-in or arrive early for an event may be given a choice of seats they can select from, preferential upgrade treatment, and/or other perks. Early user check-in and/or early arrival to an event may be useful for gathering data about the expected attendance for an event, seat allocation, decisions related to additional release of pre-issue tickets and the like.

In some embodiments, the pre-issue tickets may be purchased or reserved at a partial or discounted price. A partial price may be charged to the user for being allocated a pre-issue ticket. An additional fee or charge may be made to the user when the user attends the event. The amount of the additional charge may, or may depend on the seat resource allocated to the user when the user checks-in or enters the venue and is allocated a specific seat resource. In some embodiments, the user may be presented with choices for different available seat resources and their respective additional costs to the user when the user checks-in or enters a venue. When purchasing a pre-issue ticket, a user may specify a maximum price or a range of prices they are willing to spend for a seat resource when they attend the event. A pre-issue ticket may have maximum seat resource price that is associated with the ticket. The pre-issue ticket may guarantee that the user will have an opportunity to receive a seat resource with a value of no more than the seat resource price associated with the pre-issue ticket. The user may be prompted or given the option to upgrade or accept higher prices seat resources. In some instances, the full price of the ticket may be due when a pre-issue ticket is purchased or allocated to a user.

In embodiments, users with pre-issue tickets may be assigned a seat resource when they check-in for the venue or enter the venue at least in part based on the goal of efficient filling of the venue. The seat resources may be assigned to users based on a filling algorithm that reduces the time to seat everyone entering the venue. Seat resources may be assigned to users in a specific order as to reduce congestion and delay from one group of event goers blocking another from entering their seats. For example, the system may assign seat resources to users entering the venue such that seat resources furthest away from the entrances are assigned first. In another example, seats resources in the middle of a row may be assigned first followed by seats in outer edges of the row.

In embodiments, seat resource assignment for users entering the venue may be adaptive and based, at least in part, on the current congestion, event goer locations, and other patterns. For example, the seat resource assignment algorithm may be modified according to the lines or sizes of queues of people waiting to enter the venue at each entrance of the venue. The seat resources assigned to users entering through an entrance with a short queue may be adjusted to divert the users from having to pass near the entrances with a large queue of users.

In some embodiments, the seating resources may be assigned to entering users based at least in part on constraints defined by the user's pre-issue ticket and venue filling goals. A user's pre-sale ticket may constrain the user to a specific class of seat or a specific section. The seat resource may be assigned from the section or class of seats that will reduce congestion when filling the venue. For example, if a user with a pre-issue ticket enters through a north side entrance of the venue and the pre-issue ticket is constrained to a seat resource on for a section towards the south end of the venue, the user may be allocated a seat resource in the designed section that is close to the north entrance as possible.

In some embodiments, the seating constraints may be introduced dynamically for each user as they enter the venue by ticket venue agents. For sporting events, for example, the team affiliation of the user's entering the venue may not be known until the user arrives at the venue. Based on the colors of the users' clothes, for example, a venue agent can deduce the affiliation of the users and identify the affiliation using a venue terminal. The seating resources for the users may be assigned to let users with the same team affiliation sit in the same sections, for example, while taking into consideration venue filling goals and/or pre-issue ticket constraints. The allocation and assignment of specific seat resources to a user may be based on information about the venue, attendance, behavior or location of other users with pre-issue tickets and/or other information.

In embodiments, special consideration for assigning seat resources to users with pre-issue ticket may be provided to accommodate groups of people. Groups of users who may desire to sit next to one another may arrive at a venue at different times and may not normally be assigned seat resources next each other. In some embodiments, pre-issue tickets may be grouped or associated with other pre-issue tickets. A pre-issue ticket of one user may be associated with the pre-issue ticket of one or more other users. The pre-issue tickets may be grouped or associated together during the initial allocation and/or distribution of the pre-issue tickets. The pre-issue tickets may be grouped or associated by the users after they have been distributed to the users. Users may use a web-portal, a ticket or venue terminal, mobile devices with an application, and the like to associate one or more pre-issue tickets together into a group. In embodiments, pre-issue tickets may be associated together using the name of the users the pre-issue tickets were distributed to. In some embodiments the pre-issue tickets may have unique identifiers and/or serial numbers such as barcodes, QR codes, and the like that may be scanned, or entered into a terminal or ticket portal to associate or group one or more pre-issue tickets.

For some events, associating pre-issue tickets into a group may provide the pre-issue ticket holders a guarantee, such that when they arrive at the venue for the event, they will be assigned seat resources next to or in close proximity to the other users of the associated pre-issue tickets. The guarantee of seat resource assignment may be contingent on one or more users arriving and/or checking-in for the event at a specific time relative to (e.g., before) the event. In some embodiments, availability of the group of seats together may depend on the time the user arrives at the venue. The ticket distribution system may provide likelihood estimates and/or predictions as to the availability of groups of seats resources based on the time or arrival. The estimates may be based, at least in part the size of the group, number of other groups of associated pre-issue tickets and the like. Groups of four, for example, may have a 50% chance of being assigned seat resources together if they arrive 30 minutes before the event start while groups of eight may only have a 20% chance of being able to receive seat resource assignments that close to one another.

In one embodiment, a user with a pre-issue ticket may arrive at a venue and the user's pre-issue ticket may be recognized by the system as associated or grouped with other pre-issue tickets. If the user is the first one from the group and there are enough seating resources such that the whole group may seat together, the seating resources may be reserved or conditionally reserved. In some embodiments, the user may be prompted with options for choosing the configuration of the groups seating resources, the location and the like. The user may, for example, prefer and choose a configuration of seats that are in a single row. The grouped seat resources reserved by the first user may be automatically allocated to the other users with the pre-issue tickets of the group. The grouped seat resources reserved by the first user may be reserved or held for the other users of the group (e.g., for a limited time). The seats may be held or reserved for the group for up to 20 minutes after the first user arrives or a specific time before the start of the event. After the hold period, the seats allocated or reserved for the groups may be allocated to other users. When another user with a pre-issue ticket that is grouped or associated with the first user enters the venue, the user may be assigned a seat resource from one of the seat resources chosen by the first user (or otherwise identified for the group). In some embodiments, the user may be given an option to adjust the time the grouped seats are held or reserved for the other users in the group for an additional fee. The user may be provided with an option to reserve the grouped seats for 20 minutes, or 1 hour or more for additional fees. The fees may be charged to each user of the group as they enter the venue or the fees may be charged only to the first user to make the reservation.

When one or more pre-issue tickets are associated or grouped together for allocating seat resources, the seat resource allocation may take into consideration constraints associated with the pre-issue tickets in the group. For example, the pre-issue tickets may not all be of the same type, some may provide users with premium seats, while others in the group may be constrained to budget seats. In some embodiments, the system may have restrictions or association rules that prevent pre-issue tickets associated with different classes of seat resources from being grouped together. For some events, the group of seats may be assigned to the lowest level of the seat class from the group, or an average class based on the average or most common class in the group.

It is to be understood that a seat resource as used herein may be used to describe a specific seat, area, location, or other resource at a venue. A seat resource may be a specific standing only location at the venue, or a specific seat. For some venue a seat resource may be a general group of seats located in a section of the venue, for example.

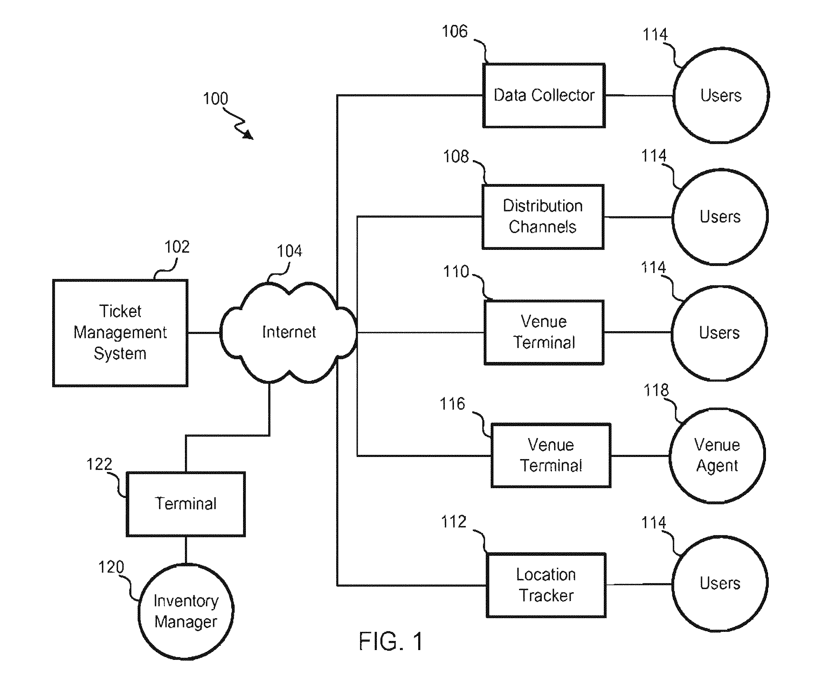

The system and method may be further described referring to the figures. Referring first to FIG. 1, a block diagram of an embodiment of a ticket interaction system 100 is shown. The system comprises a ticket management system 102 connected, through a network 104, to one or more distribution channels 108, terminals 110, data collection and reporting services 106, location services 112. The network 104 may be or a wide area network (WAN), public network, local area network (LAN) or other backbone.

Users can access the ticket management system 102 to be pre-issued a ticket via the Internet 104 and, e.g., a distribution channel 108 The data collector 106 and/or the location tracker 112 can be used to collect information pertaining to a user. The venue terminal 110 can operate to receive a pre-issued ticket and/or to assign a seat resource. In some instances, a user 114 initiates this communication,, and in some instances, system 10 initiates the communication. Users 114 may include a potential ticket purchaser, a person estimated to be interested in attending an event (e.g., based on past event attendances, past ticket purchases, search histories, profile characteristics, and/or group memberships), a person attempting or having attempted to buy a ticket for an event, and/or a person interacting or having previously interacted with a website to purchase a ticket for an event.

The system 102 may be used to first distribute pre-issue tickets to users. The ticket management system 102 may allocate pre-issue tickets based on, e.g., user activity, historical information, and data sources using at least in part one or more data collectors 106. The pre-issue tickets may be distributed to users 114 via any one of the distribution channels 108 venue terminals 110, 116, and other physical and/or electronic means.

The ticket interaction system may 100 may be used to monitor and estimate user attendance for the event. The data collector 106 may be used to receive indications from users 114 with pre-issue tickets if they are planning on attending the event. The data collector 106 may also monitor the social media and other outlets to determine the popularity of an event. The collected data may be used to estimate the attendance for the event and based on the estimate allocate and distribute more pre-issue tickets.

During the time of the event, the ticket management system 102 may be used to allocate and assign seat resources to users as they enter the venue, check-in to the venue, or may be detected to be close to the venue based on the data received from the data collector 106 which may include a location tracker 112 for determining the geolocation data from the users 114. Users entering the venue, for example, may interact with a venue terminal 110 and present their pre-issue tickets and receive a seat resource assignment. A venue terminal may be accessed using one or more venue agents 118. A venue agent may be a person, a ticket scanner connected to the venue terminal 116. In some embodiments the venue agent may include a web portal or other electronic portal that may be accessed or interacted with an electronic device and/or an application on a user's mobile device. The interaction system may include more than one venue terminal located at different areas of the venue or around the venue. Ticket management system 102 may use information about the location of the terminals when assigning and allocating seat resources in the venue to users. In some instances, ticket management system 102 resides in a cloud. It will be appreciated that ticket management system 102 can be, e.g., integrated into a venue terminal.

The ticket management system may be monitored and managed by an inventory manger 120 that may access the inventory via a terminal 122. The terminal 122 may be directly connected to the ticket management system or may connect to the via a network 104. The terminal 122 may generate an interface for interacting with the ticket management system. Using the interface provided by the terminal 122, the ticket manager 120 may allocate and/or distribute pre-issue tickets, modify ticket distribution/allocation parameters, assign seat resources, and/or the like.

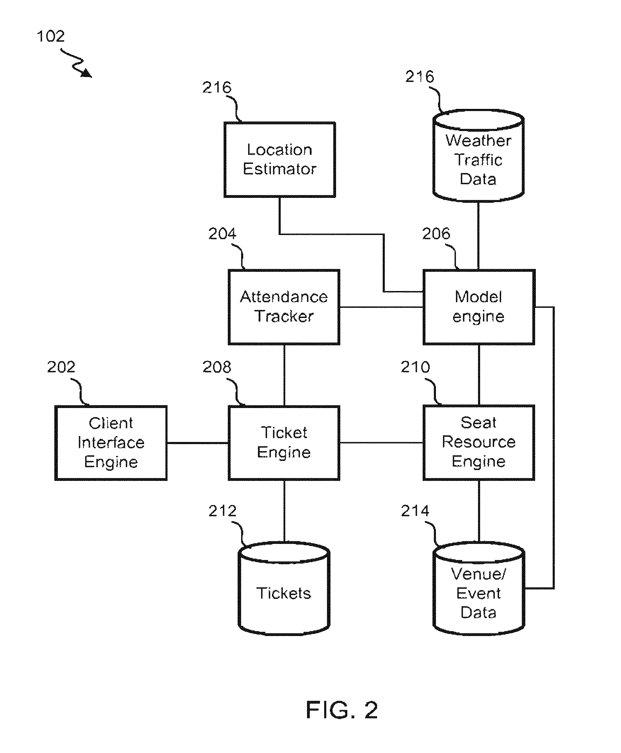

FIG. 2 shows components of one embodiment of a ticket management system 102. The ticket management system 102 may include a ticket engine 208 for allocating and distributing pre-issue tickets. The ticket engine 208 may track the issued and allocated tickets using a tickets database 212. The tickets database 212 may be used to track the assignment, history, or properties of a pre-issued ticket. To determine the number of pre-issue tickets to allocate for an event, the ticket engine 208 may interact with an attendance tracker 204 module and a model engine 206. The attendance tracker 204 and the model engine 206 may be used to estimate or calculate the expected attendance rate for the event. Model engine may access historical venue and/or event data to determine historical attendance rates for similar events, venues, events for similar times, and the like. The model engine may use additional information from weather or traffic data databases 216 to generate a prediction or an attendance model for the event. Based at least in part on the attendance prediction from the model engine, the ticket engine 208 may allocate pre-issue tickets and distribute the tickets via various distribution channels with client interface engine 202. The client interface engine 202 may interface and communicate with venue terminals 116 and distribution channels 108 of the ticket interaction system 100. The ticket engine 208 may allocate and distribute more pre-issue tickets than the capacity of the venue for the event. The ticket engine 208 may use the attendance model to create a pre-issue ticket distribution plan and schedule.

The attendance model generated by the model engine 206 may produce more detailed predictions regarding the popularity, attendance, user feedback is received. User feedback may be received via the client interface engine 202 and maintained in the attendance tracker 204. The data may be used by the model engine 206 to refine the attendance model. Based on the refinements the ticket engine 208 may allocate and distribute more pre-issue tickets, change the distribution channels used to distribute the pre-issue tickets, or even remove some pre-issue tickets from distribution and de-allocate them.

In some embodiments, the ticket engine 208 may be used to manage the allocation and distribution of seat resources for the event as users enter or check-in for the event. The ticket engine 208 may be used to receive and process seat resource requests from the client interface engine 202 from venue terminals and venue agents as users enter the venue for the event. The ticket engine may receive information about the pre-issue ticket associated with each request. The validity of the pre-issue ticket may be verified using the ticket database 212. The ticket engine 208 may determine any seat resource assignment constraints associated with the pre-issue ticket. Constraints may include, for example, type of seat resource, location preferences, upgrade eligibility, grouping or association with other pre-issue tickets, venue filling preferences, and/or the like. The ticket engine 208 may invoke the seat resource engine 214 to search for an available seat resource based on the constraints and allocate the seat resource to the user. The seat resource engine 214 may access the venue/event data database 214 and the attendance model from the model engine 206 to identify available seat resources for the event. The seat resource engine may, for example, use data from the model engine 206 to determine the likely arrival rate and/or arrival times of users for the event. Based at least in part on the data, the seat resource engine 214 may identify seat resources to facilitate faster filling of the venue, for example.

In some embodiments, the seat resource engine 214 may first locate available seats that match at least one constraint associated with the pre-issue ticket. For the identified seats, the seat resource engine 214 may assign a desirability score. The desirability score for the seat resource may be based on historical sales characteristics for the seat, the price users paid for the seat, how closely the characteristics of the seat match the user's preferences, and the like. For example, if the user's preferences identify stage viewing angle as the one of the most important parameters, the resource engine 214 may assign a higher score to the available seats with a more direct viewing angle. In some embodiments, the user may be presented with a choice of one of the seat resources from the top three or top five available seat resources. Alternatively, the seat resource with the top score may be selected for the user by the seat resource engine 210. The ticket engine 208 may receive the selected seat resource and allocate the seat resource to the user. The seat resource assignment may be presented to the user via the client interface engine 202 which may prompt a venue terminal print a seat resource assignment, print a new ticket with the seat resource assignment, and/or update an electronic ticket accessible by the user.

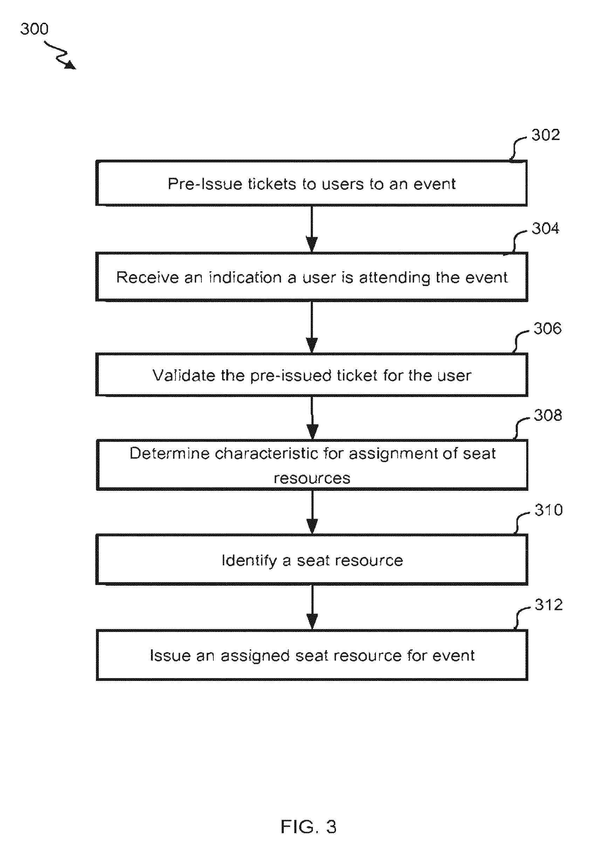

FIG. 3 shows a flowchart for an embodiment of a process for allocating pre-issue tickets and assigning seat resources for the pre-issue tickets. In block 302, the ticket engine 208 may allocate and distribute pre-issue tickets for an event. The ticket engine 208 may allocate more pre-issue tickets than the capacity of the venue. Various types of pre-issue tickets may be allocated. Some pre-issue tickets may have constraints on the seat resources that may be assigned to the pre-issue ticket. Restrictions may include seat resource constraints, grouping constraints, arrival time constraints, and/or the like. The pre-issue ticket may be distributed to users through different distribution channels such as auctions, kiosks, online stores, and/or the like. The pre-issue tickets may be given away for free in some cases, or sold at a partial price with the full price due when the seat resource is assigned to the user. In block 304, an indication may be received from the user at the attendance tracker 204 with the pre-issue ticket regarding their expected attendance for the event. The indication may be explicit from the user, such as the user entering and presenting the pre-issue ticket to a venue agent at the event venue. In some cases, the indication may be implicit based on the users location, for example. Geo-location data from the user's mobile device may be used to determine the user's location using the location estimator 216 and if the user is within a specific distance of the venue, it may be used as an indirect indication that the user may be attending the event. Other indirect indications may be the use of the credit card near the venue, such as a parking lot, for example.

In block 306, the pre-issue ticket may be validated using the tickets database 212 and in block 308 the seat resource restriction associated with the pre-issue ticket may be examined by the seat resource engine 210 to determine characteristics of the seats that may be assigned to the user. The specific section or a venue from which the user may be entitled to a seat resource may be identified. In some instances, the restriction may be based on other constraints such as venue filling constraints, for example. Based on the entrance of the user, specific area of the venue may be identified that would reduce the filling time of the venue.

In block 310, a specific seat resource may be identified and allocated to the user. A specific seat resource may be selected from the seat resources identified in the previous step. The available seats resources may be presented to the user allowing the user to make their own selection. In some embodiments, the seat resource may be selected by scoring the available seats based on, e.g., general user preferences, specific user preferences, venue restrictions, and/or the like. Seat resources may be scored based on congestion factors in the venue. Seat resources may be identified and scored based on crowds, existing congestion conditions, and/or predicted congestion conditions in the venue. The highest scoring seat may be allocated to the user and issued to the user in block 312 using the ticket engine 208. In block 312, the seat resources may be issued to the user by, e.g., printing the seat assignment on the pre-issue ticket, issuing a new ticket, or transmitting an update or an indication of the issued seat resource to the user's electronic ticket.

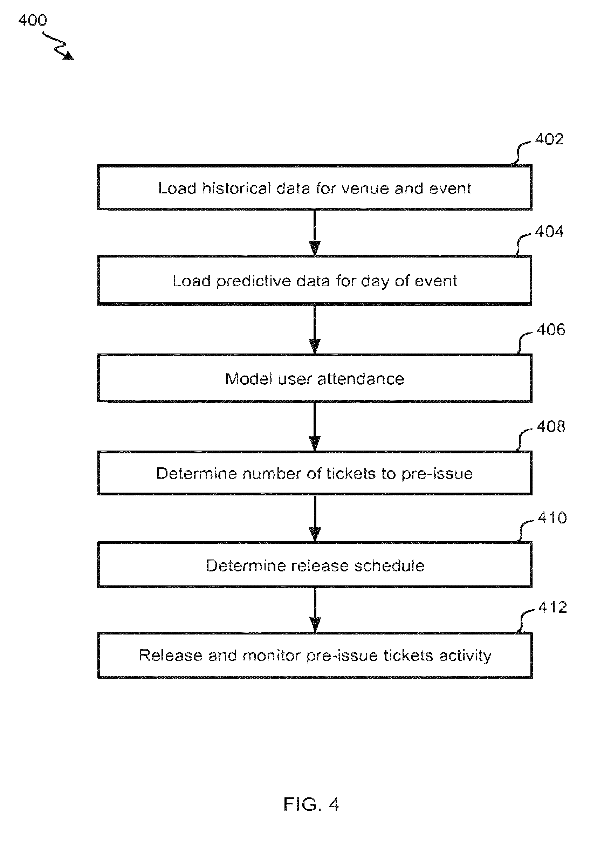

FIG. 4 shows a flowchart for an embodiment of a process for determining the allocation of pre-issue tickets for an event. The number of pre-issue tickets, their release schedule, distribution channels, and the like may be determined to achieve a specific attendance or venue filling. In block 402, the historical data related to the venue and/or the event and/or other similar venues and events may be loaded from a venue/event database 214. The data may include attendance data, time of arrival for users to the event, competing events during the same time as the past events, and the like.

In block 404, additional data may be defined and loaded from weather or traffic databases 216 or data services. The additional data may relate to the weather conditions expected at the time of the event, traffic patterns, schedule of competing events, and/or the like. In block 406 the data may be assembled, correlated, searched, and analyzed by the model engine 206 to model expected and/or likely user attendance for the event. In embodiments the model may provide several possible attendance scenarios based on expected events. For example, if the event date is rainy date, the attendance may be much lower than the attendance if it is sunny day for the day of the event. The models and predictions may include attendance predictions based on the type of the pre-issue ticket, the distribution channel the pre-issue ticket was sold, price for the pre-issue ticket, and/or the like.

Based on the models and predictions, in block 410, the allocation of the pre-issue tickets may be determined by the ticket engine 208. The allocation may include the number of pre-issue tickets release, the price of the tickets, what distribution channels to use and how to allocate the tickets among the distribution channels, and/or the like. The models and predictions may be used to score specific seat resources or sections of the venue. The score for the seat resources and/or sections may influence which seats are assigned to each user. In block 410 the release schedule for the pre-issue tickets may be determined. The release schedule may be based on the certainty of the attendance models. If the certainty of the modeled attendance is low (i.e., the difference in attendance predictions differs by more than a threshold percentage, such as 20%), the release schedule may be staged and the tickets may be released in batches until the certainty of the models increases, for example. In block 412 the allocated pre-issue tickets may be released and distributed to the users via the client interface engine 202. The activity of the pre-issue tickets and/or the event on social media, ticket resale channels, may be monitored to gauge the popularity and refine attendance models for the event by the model engine 206.

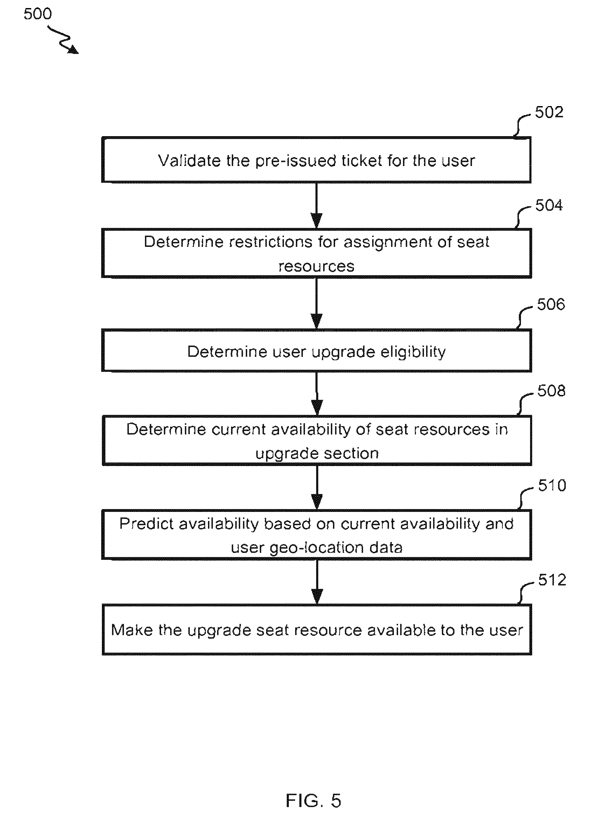

FIG. 5 shows a flowchart for an embodiment of a process for determining and assigning a seat resource to a user with a pre-issue ticket. When a user enters the venue for the event the user may be assigned a seat resource at the venue. The assignment of seat resources may be based on the activity at the venue, type of pre-issue ticket, activity of other users, and/or the like. In block 502 the validity of the pre-issue ticket may be determined by the ticket engine 208. Security markers, ticket databases, and security features of the pre-issue ticket may be verified. In block 504, any restrictions related to seat resources associated with the pre-issue ticket may be determined using the seat resource engine 210. The pre-issue tickets may, for example, guarantee the user with a specific type of seat, or a seat in a specific area of the venue. A specific area of the venue for a possible seating resource that may be assigned to the user may be determined.

In block 506, the upgrade eligibility of the user may be analyzed by the seat resource engine 210 to determine if the user may be upgraded or assigned a higher value seat resource. The higher value seat resource may be a seat closer to the stage, for example. The eligibility of a user to receive a seat resource upgrade may be scored. The scoring for eligibility may be determined in part based on the user's profile and/or purchase history. Loyal customers who purchase and/or attend many events may be assigned a higher upgrade eligibility score than a first time customer, for example. Additional consideration in determining an upgrade score may be given to the type of pre-issue ticket for which an upgrade is considered. Pre-issue tickets associated or constrained to higher value seat resources may be assigned a higher upgrade score. Based on the attendance trends, expected or modeled attendance trends an upgrade cutoff score may be determined. Users with a score lower than the cutoff score may not be considered for an upgrade while users with an upgrade score may be considered for an upgrade if a suitable seat can be found. The cutoff score may be different for each event and may be dynamically adjusted based on the attendance trends for an event. An event for which the attendance is high may have a high cutoff upgrade score. If the user is eligible for an upgrade based on the upgrade scores the availability of an upgrade seat resource may be determined in block 508. The available seat resources may be searched to determine higher value seat resources that may be available. A list of currently unassigned seat resources that may be potentially used for upgrades for the user may be determined. In block 510, the predicted availability of the seats may be determined based on the current availability, attendance trends, geolocation of users, and/or the like using the model engine 206. Although seats for an upgrade seat resource may be available at the time the upgrade is considered, other non-upgrade users with an eligibility for the seat resources may not have arrived at the venue. Based on the geolocation of the users, attendance rates, and the like the likelihood of the available seats being all claimed may be determined. If the likelihood is low, the upgrade seat resource may be made available to the user in block 512 through the client interface engine 202.

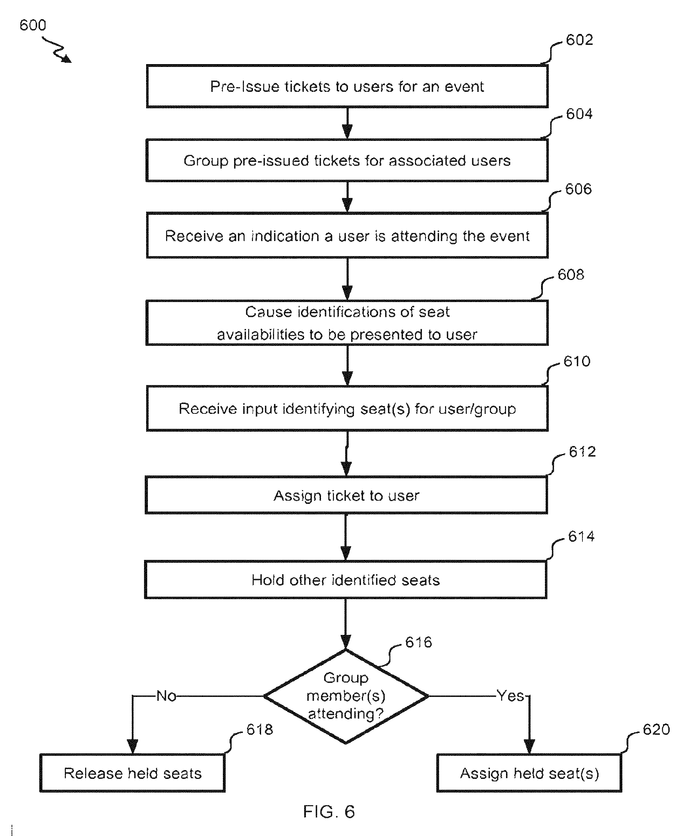

FIG. 6 shows a flowchart for an embodiment of a process for allocating seat resources to an associated group of pre-issue ticket holders. Some of the users with pre-issue tickets may desire to sit next to one another at the venue for the event. However, in a simple embodiment, since users may not be assigned seat resources until they arrive at the event, they may not be assigned seats next one another unless they all arrive together at the same time. Pre-issue tickets may be associated with other pre-issue tickets and grouped to help assign seat resources to the group that may be next to each other.

In block 602, the pre-issue tickets may be distributed to users, and in block 604 some of the pre-issue tickets may be grouped by associating some of the tickets with one another by the ticket engine 208. The pre-issue tickets may be associated by users using a venue terminal, web portal, web page, or other means. Users may enter several pre-issue ticket identifiers requesting that they be associated and grouped together. In some embodiments, users can be automatically grouped. Users may be grouped based on the users profile characteristics. Users with similar profiles may be automatically grouped. In some instances, the user's contact lists may be accessed to determine whether any friends are attending an event and the friends may be grouped together. After the pre-issue tickets have been grouped, an indication that at least one of the users from the group of users of the associated pre-issue tickets arrived at the venue for the event may be received at block 606. The indication may be received, for example, when one of the user's presents a pre-issue ticket for entry.

In block 608, size of the group may be determined and seat resources of the users of the group identified in the venue using the seat resource engine 210. The identified seat resources may be presented to the user for approval via a terminal or other means. In block 610 the user may select the available seats for the users in the group. The user may select a preferred configuration of seats, for example, the user may choose all the seats to be located in one row. It will, however, be appreciated that blocks 608-610 may be modified to cause seats to be automatically identified for the user and group (e.g., by selecting a group of seats with a best overall score).

After the user makes the selection, a ticket with one of the selected seat resources may be assigned to the user in block 612. In block 614 the identified seat resources may be removed from a list of available seats resources by the seat resource engine 210 in anticipation for the rest of the users from the group arriving at the venue. In block 616 the system may wait a specific time for an indication that other user from the group are attending the event. When one of the other users arrives with their pre-issue ticket at the venue, a seat resource from the earlier identified group of seat resources may be assigned to the user in block 620. The group of seat resources may be held or reserved for a fixed period of time in anticipation of the other user's arrival. After a predetermined time, or if an indication is received that a user from the group is not attending the un assigned seat resources from the group may be released and assigned to other users by the seat resource engine 210 that are not part of the group in block 618.

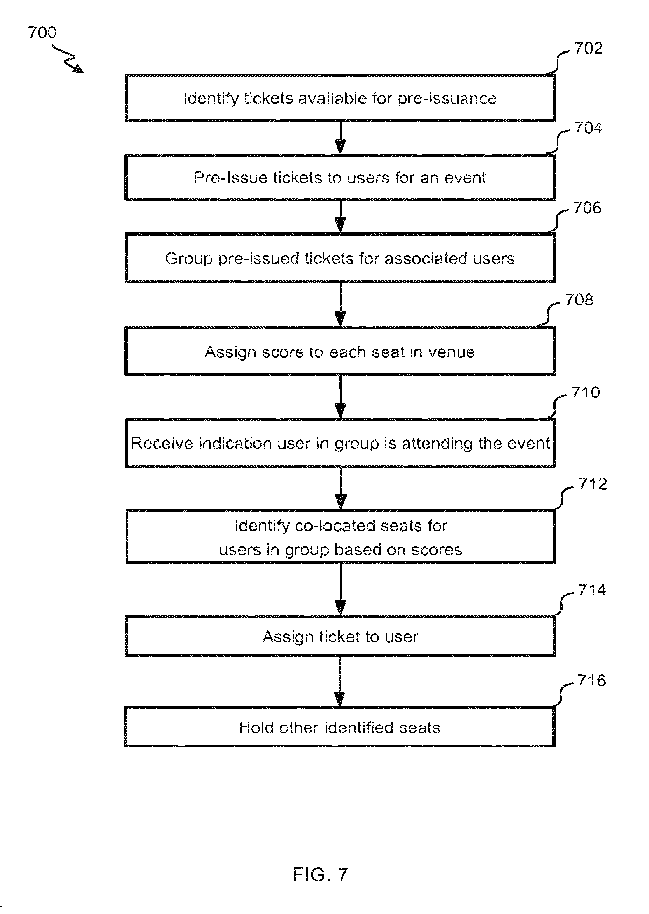

FIG. 7 shows a flowchart for an another embodiment of a process for allocating seat resources to an associated group of pre-issue ticket holders. In block 702 tickets available for pre-issuance are identified by the seat resource engine 210. The tickets may be identified based on a release schedule, based on the distribution channel, and/or the like. In block 704, the pre-issue tickets may be allocated and distributed to users by the ticket engine 208. In block 706, some of the pre-issue tickets may be grouped for associated users. In block 708, a score may be assigned to each seat resource in the venue by the seat resource engine 210. The score may computed based on an expected desirability of the users of the group. The score may be computed based on the purchase histories, preferences, user profiles, and the like of one or more users of the group. In block 710, an indication is received that at least one of the user from the group is attending the event. The indication may be received via the client interface engine 202 when the user enters the venue, checks-in using their mobile device, for example. When the indication is received, the system may identify co-located seat resourced for users in the group based on the computed score in block 712. The available seat resources may be the highest scored collocated seat resources. In some embodiments the seat resources for the group may be chosen such that the seat with the lowest score is as high as possible. In other embodiments the collocated seat resources may be selected to maximize the average, median, or other parameter of the computed score for the seat resources for the selected seat resources. In block 714 a seat resource from the selected seat resources for the group may be assigned to the user by the ticket engine and the user may be issued a ticket. In block 716, other identified seat resources may be reserved and held for other users. The seat resources may be held for a limited time after the seats are selected by the user.

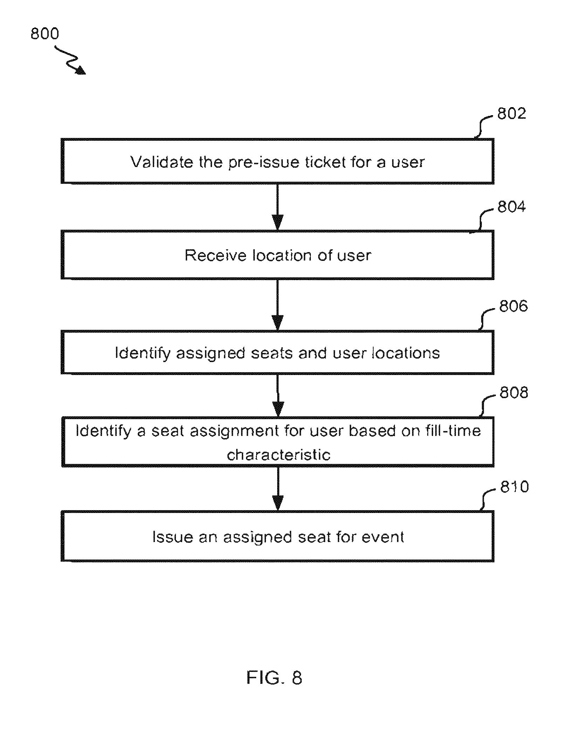

**FIG.** 8 illustrates a flowchart of an embodiment of a process for allocating seat resources for an efficient filling of a venue. When users enter a venue for an event it may be desirable to fill he venue efficiently and quickly to avoid confusion, improve safety, and prevent delay to an event. The efficiency of and speed at which a venue is filled may depend on the order of seats that the users entering the venue are directed to. In embodiments, when users with pre-issue tickets enter a venue for an event, seat resources may be assigned to the users to decrease the time necessary to fill to the venue.

In block 802, the pre-issue ticket of users entering the venue may be authenticated by the ticket engine 208. The user may be required to present the ticket to a ticket agent, a ticket kiosk, or identify the pre-issue ticket using other means. In block 804 the system may determine the location of the user entering the venue. The location may be determined based on geolocation data determined by the location estimator 216 and/or based on a known location of a ticket kiosk or ticket agent the user used to authenticate their pre-issue ticket.

In block 806, the seat resource engine 210 may identify unassigned seat resources and other users locations and movement characteristics in the venue. The model engine 206 may use geo-location data from other users, image processing, and other means to identify entrances with long user queues, area of the venue with congestion, and/or the like. In block 808, the seat resource engine 210 may identify a seat resource that may be assigned to the user based on the gathered information. The seat resource may be chosen to avoid congestion in the venue and/or to predict reduce the time that it would take for the user to get to their seat resource. In block 810 the user may be issued an assigned seat resource. The system may track the user's progress through the venue as the user makes his way to the assigned seat. The trajectory, path, speed, and the like may be tracked to determine congestion in the venue and may be used to determine the seat resource assignment for following users entering the venue.

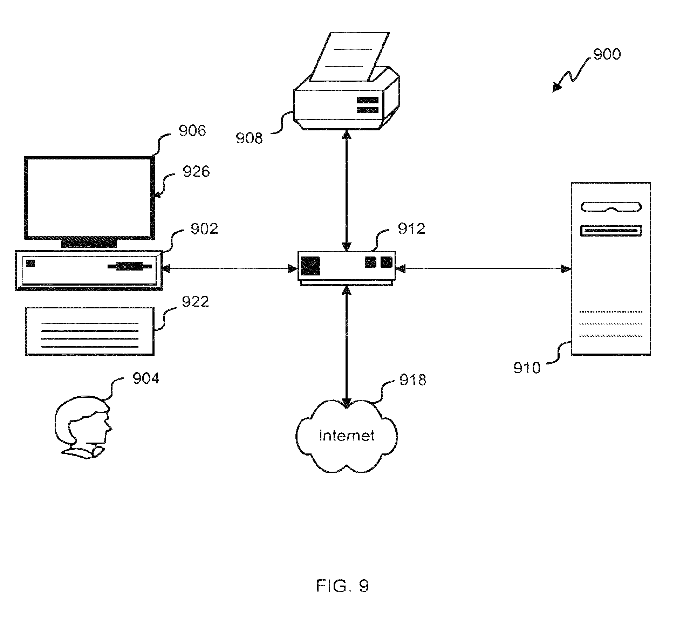

Referring next to FIG. 9, an exemplary environment with which embodiments can be implemented is shown with a computer system 900 that can be used by a designer 904 to design, for example, electronic designs. The computer system 900 can include a computer 902, keyboard 922, a network router 912, a printer 908, and a monitor 906. The monitor 906, processor 902 and keyboard 922 are part of a computer system 926, which can be a laptop computer, desktop computer, handheld computer, mainframe computer, etc. Monitor 906 can be a CRT, flat screen, etc.

A designer 904 can input commands into computer 902 using various input devices, such as a mouse, keyboard 922, track ball, touch screen, etc. If the computer system 900 comprises a mainframe, a designer 904 can access computer 902 using, for example, a terminal or terminal interface. Additionally, computer system 926 can be connected to a printer 908 and a server 910 using a network router 912, which can connect to the Internet 918 or a WAN.

Server 910 can, for example, be used to store additional software programs and data. In one embodiment, software implementing the systems and methods described herein can be stored on a storage medium in server 910. Thus, the software can be run from the storage medium in server 910. In another embodiment, software implementing the systems and methods described herein can be stored on a storage medium in computer 902. Thus, the software can be run from the storage medium in computer system 926. Therefore, in this embodiment, the software can be used whether or not computer 902 is connected to network router 912. Printer 908 can be connected directly to computer 902, in which case, computer system 926 can print whether or not it is connected to network router 912.

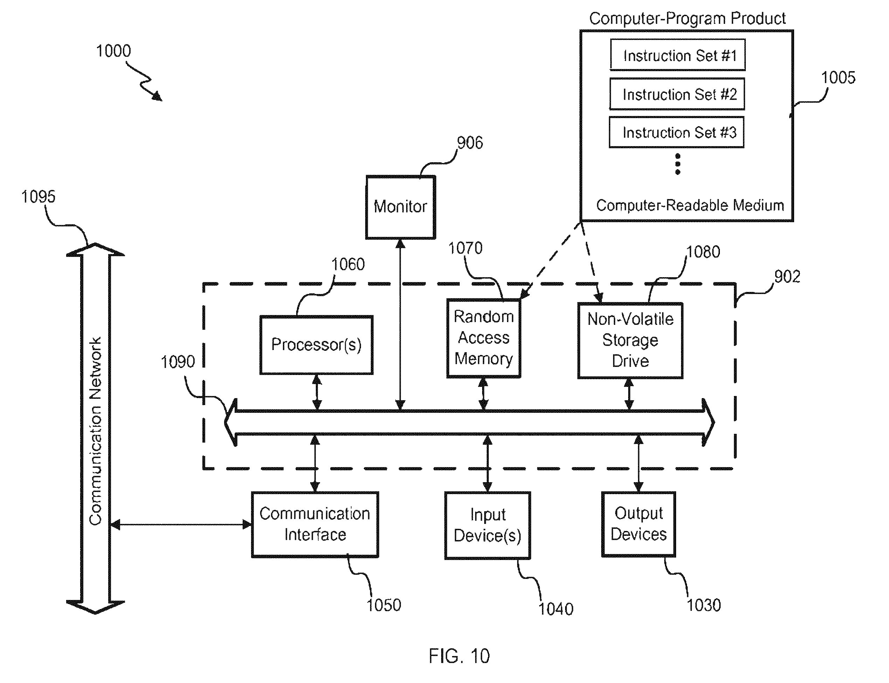

With reference to **FIG. 10****,** an embodiment of a special-purpose computer system 1000 is shown. Ticket management system 102 and/or any components thereof are examples of a special-purpose computer system 1000. Thus, for example, one or more special-purpose computer systems 1000 can be used to provide the function of ticket management system 102 or a component thereof (e.g., ticket engine 208 or seat resource engine 210). The above methods can be implemented by computer-program products that direct a computer system to perform the actions of the above-described methods and components. Each such computer-program product can comprise sets of instructions (codes) embodied on a computer-readable medium that directs the processor of a computer system to perform corresponding actions. The instructions can be configured to run in sequential order, or in parallel (such as under different processing threads), or in a combination thereof. After loading the computer-program products on a general purpose computer system 926, it is transformed into the special-purpose computer system 1000.

Special-purpose computer system 1000 comprises a computer 902, a monitor 906 coupled to computer 902, one or more additional user output devices 1030 (optional) coupled to computer 902, one or more user input devices 1040 (e.g., keyboard, mouse, track ball, touch screen) coupled to computer 902, an optional communications interface 1050 coupled to computer 902, a computer-program product 1005 stored in a tangible computer-readable memory in computer 902. Computer-program product 1005 directs system 1000 to perform the above-described methods. Computer 902 can include one or more processors 1060 that communicate with a number of peripheral devices via a bus subsystem 1090. These peripheral devices can include user output device(s) 1030, user input device(s) 1040, communications interface 1050, and a storage subsystem, such as random access memory (RAM) 1070 and non-volatile storage drive 1080 (e.g., disk drive, optical drive, solid state drive), which are forms of tangible computer-readable memory.

Computer-program product 1005 can be stored in non-volatile storage drive 1090 or another computer-readable medium accessible to computer 902 and loaded into memory 1070. Each processor 1060 can comprise a microprocessor, such as a microprocessor from Intel^{®} or Advanced Micro Devices, Inc^{®}, or the like. To support computer-program product 1005, the computer 902 runs an operating system that handles the communications of product 1005 with the above-noted components, as well as the communications between the above-noted components in support of the computer-program product 1005. Exemplary operating systems include Windows^{®} or the like from Microsoft Corporation, Solaris^{®} from Sun Microsystems, LINUX, UNIX, and the like.

User input devices 1040 include all possible types of devices and mechanisms to input information to computer system 902. These can include a keyboard, a keypad, a mouse, a scanner, a digital drawing pad, a touch screen incorporated into the display, audio input devices such as voice recognition systems, microphones, and other types of input devices. In various embodiments, user input devices 1040 are typically embodied as a computer mouse, a trackball, a track pad, a joystick, wireless remote, a drawing tablet, a voice command system. User input devices 1040 typically allow a user to select objects, icons, text and the like that appear on the monitor 906 via a command such as a click of a button or the like. User output devices 1030 include all possible types of devices and mechanisms to output information from computer 902. These can include a display (e.g., monitor 906), printers, non-visual displays such as audio output devices, etc.

Communications interface 1050 provides an interface to other communication networks and devices and can serve as an interface to receive data from and transmit data to other systems, WANs and/or the Internet 918. Embodiments of communications interface 1050 typically include an Ethernet card, a modem (telephone, satellite, cable, ISDN), a (asynchronous) digital subscriber line (DSL) unit, a FireWire^{®} interface, a USB^{®} interface, a wireless network adapter, and the like. For example, communications interface 1050 can be coupled to a computer network, to a FireWire^{®} bus, or the like. In other embodiments, communications interface 1050 can be physically integrated on the motherboard of computer 902, and/or can be a software program, or the like.

RAM 1070 and non-volatile storage drive 1080 are examples of tangible computer-readable media configured to store data such as computer-program product embodiments of the present invention, including executable computer code, human-readable code, or the like. Other types of tangible computer-readable media include floppy disks, removable hard disks, optical storage media such as CD-ROMs, DVDs, bar codes, semiconductor memories such as flash memories, read-only-memories (ROMs), battery-backed volatile memories, networked storage devices, and the like. RAM 1070 and non-volatile storage drive 1080 can be configured to store the basic programming and data constructs that provide the functionality of various embodiments of the present invention, as described above.

Software instruction sets that provide the functionality of the present invention can be stored in RAM 1070 and non-volatile storage drive 1080. These instruction sets or code can be executed by processor(s) 1060. RAM 1070 and non-volatile storage drive 1080 can also provide a repository to store data and data structures used in accordance with the present invention. RAM 1070 and non-volatile storage drive 1080 can include a number of memories including a main random access memory (RAM) to store of instructions and data during program execution and a read-only memory (ROM) in which fixed instructions are stored. RAM 1070 and non-volatile storage drive 1080 can include a file storage subsystem providing persistent (non-volatile) storage of program and/or data files. RAM 1070 and non-volatile storage drive 1080 can also include removable storage systems, such as removable flash memory.

Bus subsystem 1090 provides a mechanism to allow the various components and subsystems of computer 902 communicate with each other as intended. Although bus subsystem 1090 is shown schematically as a single bus, alternative embodiments of the bus subsystem can utilize multiple busses or communication paths within computer 902.

It will be appreciated that embodiments disclosed herein with respect to a single ticket may also (e.g., in other embodiments) pertain to a group of tickets, and the converse. Further, embodiments disclosed with respect to one or more tickets to a single event may, in other embodiments, relate to season tickets.

Specific details are given in the above description to provide a thorough understanding of the embodiments. However, it is understood that the embodiments can be practiced without these specific details. For example, circuits can be shown in block diagrams in order not to obscure the embodiments in unnecessary detail. In other instances, well-known circuits, processes, algorithms, structures, and techniques can be shown without unnecessary detail in order to avoid obscuring the embodiments.

Implementation of the techniques, blocks, steps and means described above can be done in various ways. For example, these techniques, blocks, steps and means can be implemented in hardware, software, or a combination thereof. For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above, and/or a combination thereof.

Also, it is noted that the embodiments can be described as a process which is depicted as a flowchart, a flow diagram, a data flow diagram, a structure diagram, or a block diagram. Although a flowchart can describe the operations as a sequential process, many of the operations can be performed in parallel or concurrently. In addition, the order of the operations can be rearranged. A process is terminated when its operations are completed, but could have additional steps not included in the figure. A process can correspond to a method, a function, a procedure, a subroutine, a subprogram, etc. When a process corresponds to a function, its termination corresponds to a return of the function to the calling function or the main function.

Furthermore, embodiments can be implemented by hardware, software, scripting languages, firmware, middleware, microcode, hardware description languages, and/or any combination thereof. When implemented in software, firmware, middleware, scripting language, and/or microcode, the program code or code segments to perform the necessary tasks can be stored in a machine readable medium such as a storage medium. A code segment or machine-executable instruction can represent a procedure, a function, a subprogram, a program, a routine, a subroutine, a module, a software package, a script, a class, or any combination of instructions, data structures, and/or program statements. A code segment can be coupled to another code segment or a hardware circuit by passing and/or receiving information, data, arguments, parameters, and/or memory contents. Information, arguments, parameters, data, etc. can be passed, forwarded, or transmitted via any suitable means including memory sharing, message passing, ticket passing, network transmission, etc.

For a firmware and/or software implementation, the methodologies can be implemented with modules (e.g., procedures, functions, and so on) that perform the functions described herein. Any machine-readable medium tangibly embodying instructions can be used in implementing the methodologies described herein. For example, software codes can be stored in a memory. Memory can be implemented within the processor or external to the processor. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium" can represent one or more memories for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels, and/or various other storage mediums capable of storing that contain or carry instruction(s) and/or data.

While the principles of the disclosure have been described above in connection with specific apparatuses and methods, it is to be clearly understood that this description is made only by way of example and not as limitation on the scope of the disclosure.

## Claims

1. A ticket management system, the system comprising:
one or more processors; and
one or more memories coupled with the one or more processors, wherein the one or more processors and one or more memories are configured to:
receive an indication that a user is attending an event at a venue hosting the event;
validate that the user had been pre-issued a ticket for the event at the venue, wherein a pre-issued ticket does not include an assignment to any seat in the venue;
determine a characteristic characterizing assignments to seats in the venue for the event;
identify a seat in the venue that has not been assigned for the event;
generate a ticket for the identified seat for the event, wherein the ticket includes an assignment to the identified seat; and
issue the ticket that includes the assignment to the identified seat to the user.

2. A method for automatically managing an allocation of tickets to an event to select potential purchasers, the method comprising:
receiving an indication that a user is attending the event at a venue hosting the event;
validating that the user had been pre-issued a ticket for the event at the venue, wherein a pre-issued ticket does not include an assignment to any seat in the venue;
determining a characteristic characterizing assignments to seats in the venue for the event;
identifying a seat in the venue that has not been assigned for the event;
generating a ticket for the identified seat for the event, wherein the ticket includes an assignment to the identified seat; and
issuing the ticket that includes the assignment to the identified seat to the user.

3. The ticket management system of claim 1, or the method of claim 2,
wherein the indication that the user is attending the event at the venue comprises geolocation information, the geolocation information providing a proximity of the user to the venue.

4. The ticket management system of claim 1, or the method of claim 2,
wherein the indication that the user is attending the event at the venue comprises a presence of the user at the venue.

5. The ticket management system of claim 1, or the method of claim 2,
wherein seats are issued in an order such that there is a correlation between demands of seats assigned and times at which the indication that the user will attend the event is received.

6. The ticket management system of claim 1, or the method of claim 2,
wherein the one or more processors and one or more memories are further configured to issue a number of pre-issued tickets for the event, wherein the number exceeds a number of available seats at the venue.

7. The ticket management system or method of claim 6, wherein the number is determined based on a number of users that attended a past event and a number of users that were issued or pre-issued tickets to the event.

8. The ticket management system or method of claim 7, wherein the size of the number of pre-issued tickets is 20% larger than a capacity of the venue for the even.

9. The ticket management system of claim 1, wherein the one or more processors and one or more memories are further configured to group the pre-issued ticket with other pre-issued tickets of other users and identifying the seat in the venue that is collocated with assigned seats associated with the other pre-issued tickets of other users.

10. A ticket management system comprising:
a ticket engine that:
receives an indication that a user is attending an event at a venue; and
validates that the user had been pre-issued a ticket for the event at the venue, wherein a pre-issued ticket does not include an assignment to any seat in the venue;
a seat resource engine that:
identifies a seat in the venue that has not been assigned for the event; and
generates a ticket for the identified seat for the event, wherein the ticket includes an assignment to the identified seat; and
a ticket engine that:
causes the ticket that includes the assignment to the identified seat to be issued.

11. The ticket management system of claim 10, further comprising a location estimator that receives user geolocation information, the geolocation information providing a proximity of the user to the venue, wherein the geolocation information is received by the ticket engine as the indication that the user is attending the event.

12. The ticket management system of claim 10, wherein the indication that the user is attending the event at the venue comprises a presence of the user at the venue.

13. The ticket management system of claim 10, wherein the client interface engine is configured to issue a number of pre-issued tickets for the event, wherein the number exceeds a number of available seats at the venue.
